# EUROPÄISCHE PATENTSCHRIFT

(11) **EP 2 410 650 B1**
(45) Veröffentlichungstag und Bekanntmachung des Hinweises auf die Patenterteilung: **25.07.2018**
(21) Anmeldenummer: 11170302.1
(22) Anmeldetag: 17.06.2011
(51) Int. Cl.: H02P 3/20, H02P 3/22, H02P 6/24, B23Q 5/10, B25F 5/00

(54) **HANDWERKZEUG**
HAND TOOL
OUTIL MANUEL

(30) Priorität: 20.07.2010 DE 102010032335
(43) Veröffentlichungstag der Anmeldung: 25.01.2012
(73) Patentinhaber: C. & E. Fein GmbH, 73529 Schwäbisch Gmünd-Bargau (DE)
(72) Erfinder: Kaufmann, Michael, 73479 Ellwangen (DE); Rinckleb, Ulf, 73485 Unterschneidheim (DE)
(74) Vertreter: Roos, Michael

(56) Entgegenhaltungen:
- DE-A1-102008 033 866
- DE-T2- 60 214 960

## Beschreibung

Die Erfindung betrifft ein Handwerkzeug mit einem Antriebsmotor, der mit einem Abtrieb koppelbar ist, einer Energieversorgungseinrichtung zur Bereitstellung elektrischer Energie, einer Steuereinrichtung mit einer Motorsteuerung zur Ansteuerung des Antriebsmotors und einem Betriebszustandserkennungsmodul, das zur Erfassung zumindest einer Betriebszustandsgröße und abhängig davon zur Ausgabe eines Bremssignals ausgebildet ist.

Gegenstand der Erfindung ist ferner ein Verfahren zur Verzögerung einer Antriebsbewegung eines Handwerkzeugs.

Ein derartiges Handwerkzeug ist aus der DE 10 2008 033 866 A1 bekannt.

Bei dem bekannten Handwerkzeug handelt es sich um eine Werkzeugmaschine mit einer Steuereinrichtung mit einer Begrenzungseinrichtung zur Begrenzung eines abtriebseitig bereitgestellten Abgabedrehmoments. Die Steuereinrichtung ist dazu ausgebildet, abhängig von mindestens einer Bremsbedingung eine Bestromungseinrichtung in einem Bremsbetrieb anzusteuern, bei dem ein Antriebsmotor der Werkzeugmaschine durch ein gegensinniges Drehfeld abgebremst wird.

Handwerkzeuge mit Elektromotoren finden Anwendung in vielen Einsatzbereichen. So sind unter andem vielerlei Geräte und Maschinen zum Bohren, Schrauben, Schlagbohren, Sägen, Schneiden, Schleifen oder Polieren bekannt.

Üblicherweise weisen die Handwerkzeuge einen Antriebsstrang mit einem Elektromotor, eine vom Motor antreibbare Werkzeugaufnahme zur Aufnahme eines Werkzeugs sowie bei Bedarf eine zwischengeschaltete Übertragungseinrichtung auf. Als Antriebsmotoren kommen bei hochwertigen Handwerkzeugen Hochleistungsmotoren mit geringem Leistungsgewicht bzw. hoher Leistungsdichte zum Einsatz. Derartige Motoren weisen etwa Nenndrehzahlen von ungefähr 10.000 min⁻¹ bis 30.000 min⁻¹ auf.

In Zusammenhang mit der Übertragungseinrichtung und einem Werkzeug, das gegebenenfalls ein hohes Trägheitsmoment aufweisen kann, können sich im Betrieb bei hohen Drehzahlen Zustände ergeben, bei denen der Antriebsstrang des Handwerkzeugs eine hohe kinetische Energie aufweist. Bei bestimmten Betriebszuständen ist es gewünscht, diese Energie schnellstmöglich abzubauen, um einen möglichst schnellen Werkzeugstillstand oder zumindest eine Verzögerung bewirken zu können. Dabei kann es sich etwa um Zustände handeln, die vom Arbeitsfortschritt abhängig sind, beispielsweise dem Erreichen einer Solltiefe bei einem Schraub- oder Bohrvorgang oder dem Erreichen eines Soll-Anzugsdrehmoments bei einem Schraubvorgang. Eine schnelle Verzögerung kann aber auch dann erforderlich sein, wenn ein unzulässiger Betriebszustand erkannt wird, etwa ein übermäßiges Verdrehen des Handwerkzeugs aufgrund eines hohen Reaktionsmoments bei einem blockierten Werkzeug. Ein Verzögerungsvorgang kann auch dazu dienen, ein relativ lange nachlaufendes Werkzeug, etwa einen Winkelschleifer, schnell abzubremsen, beispielsweise um unmittelbar nach dem Gebrauch ein sicheres Ablegen zu ermöglichen.

In der DE 2008 033 866 A1 wird vorgeschlagen, zur Begrenzung des Abgabedrehmoments einer Werkzeugmaschine deren Antriebsmotor mit einem der momentanen Drehrichtung gegensinnigen Drehfeld zu beaufschlagen. Mittels eines derart initiierten Bremsbetriebs soll das Abgabedrehmoment der Werkzeugmaschine geregelt werden.

Es hat sich gezeigt, dass eine solche Gegenbestromung des Antriebsmotors dazu beitragen kann, das Handwerkzeug zügig abzubremsen. Jedoch kann die Gegenbestromung insbesondere bei Anwendungen, bei denen eine hohe Verzögerung bzw. eine hohe Dynamik der Regelung des Bremsvorgangs gewünscht ist, mit hohen Bauteilbelastungen einhergehen.

Aus der DE 10 2008 033 466 A1 ist ein Handwerkzeug mit einem Antriebsmotor gemäß dem Oberbegriff von Anspruch 1 bekannt.

Der Antriebsmotor kann hierbei zum Bremsen entweder in einen Kurzschlussmodus geschaltet werden oder aber über ein Bestromungsmodul entgegen seinem ursprünglichen Drehsinn bestromt werden, um eine aktive Bremsung (Umkehrbremsen) zu erreichen.

Auch hierbei besteht allerdings die Gefahr von hohen Bauteilbelastungen, insbesondere wenn der Antriebsmotor im aktiven Bremsmodus betrieben wird.

Aus der DE 602 14 960 T2 ist eine Motoransteuervorrichtung für einen Antriebsmotor bekannt, bei dem ein Bremsverfahren vorgesehen ist, das die Drehzahl des Elektromotors durch abwechselndes Kurzschlussbremsen bzw. aktives Bremsen oder Umkehrbremsen reduziert. Durch eine Umschaltung zwischen den verschiedenen Bremsmodi in Abhängigkeit von der Drehzahl des Motors soll das Bremsgeräusch reduziert werden und die Anhaltezeit verkürzt werden.

Auch bei einem derartigen Motor besteht die Gefahr von hohen Bauteilbelastungen.

Vor diesem Hintergrund liegt der Erfindung die Aufgabe zugrunde, ein Handwerkzeug und ein Verfahren zur Steuerung eines Handwerkzeugs anzugeben, womit bei möglichst geringer Bauteilbeanspruchung und verbesserter Haltbarkeit eine gute Bremswirkung gewährleistet werden kann.

Diese Aufgabe wird bei einem Handwerkzeug gemäß der vorstehend genannten Art erfindungsgemäß durch Anspruch 1 gelöst.

Die Aufgabe der Erfindung wird ferner gelöst durch ein Verfahren nach Anspruch 12.

Erfindungsgemäß wird eine vorteilhafte Verknüpfung von möglichst kurzer Bremszeit und einer gewünschten Bauteilentlastung bewirkt, indem während eines Bremszyklus in einer Phase die Verzögerung mittels einer Kurzschlussbremsung und in einer zweiten Phase mittels einer Gegenstrombremsung erfolgt. Dabei wird durch die Steuereinrichtung durch eine Ableitung des ersten Zeitabschnitts und damit des zweiten Zeitabschnitts gewährleistet, dass Maximalwerte für Strom oder Spannung nicht überschritten werden.

Es erfolgt also eine gezielte Steuerung der Dauer der Zeitabschnitte, um zu gewährleisten, dass bestimmte Bauteilbelastungen nicht überschritten werden.

Auf diese Weise kann einerseits eine gezielte Bremswirkung erreicht werden und andererseits eine Bauteilüberlastung sicher vermieden werden.

Die erste Phase und die zweite Phase, also im Wesentlichen der erste Zeitabschnitt und der zweite Zeitabschnitt, können dabei bewusst unter Berücksichtigung der Betriebszustandsgröße oder weiterer Größen, die beim Betrieb des Handwerkzeugs erfasst werden können, bestimmt oder von diesen abgeleitet werden. So kann ein Optimum aus der Vermeidung übermäßiger Belastungen von Bauteilen des Handwerkzeugs und einer möglichst großen Verzögerung erzielt werden.

Während einer Bremsung mittels Kurzschluss etwa von Erregerwicklungen des Antriebsmotors kann zwar nur eine relativ moderate, nicht beliebig hohe Verzögerung bewirkt werden, jedoch erfolgt dies grundsätzlich ohne wesentliche Rückwirkung auf die Energieversorgungseinrichtung, die Steuereinrichtung oder andere Komponenten des Handwerkzeugs. Die überschüssige kinetische Energie wird dabei vorrangig in Form von Wärmeverlusten abgebaut.

Demgegenüber erfolgt bei einer Verzögerung mittels Gegenbestromung etwa eine Bestromung der Erregerwicklungen des Antriebsmotors mit einem Drehfeld, dessen Drehsinn dem ursprünglichen Ausgangsdrehfeld gegengerichtet ist. Es erfolgt dabei gewissermaßen eine "aktive" Verzögerung, welche einerseits hohe Verzögerungswerte aufweisen kann, andererseits jedoch regelmäßig mit Rückwirkungen auf die Energieversorgungseinrichtung oder die Steuereinrichtung des Hand werkzeugs einhergeht. Dies ist grundsätzlich durch eine Gegeninduktion in den einzelnen Erregerwicklungen sowie die generatorische Wirkung des abzubremsenden Elektromotors bedingt. Es kann dabei insbesondere zu Spannungsüberhöhungen und Stromstößen kommen, welche Bauteile des Handwerkzeugs schädigen könnten, so dass diese entsprechend dimensioniert sein müssen.

Obgleich die bei einer Gegenbestromung grundsätzlich mögliche Rückspeisung von Energie in die Quelle genutzt werden kann, um den Gesamtenergieverbrauch des Handwerkzeugs zu minimieren, so ist zu befürchten, dass dabei insbesondere zu Beginn eines ausschließlich auf Gegenbestromung beruhenden Bremszyklus Spannungsüberhöhungen auftreten können, die sich nachteilig auf die Lebensdauer von Komponenten des Handwerkzeugs auswirken können.

Dies gilt insbesondere bei Speicherelementen bzw. Ausgleichselementen, die zwischen der Energieversorgungseinrichtung und dem Antriebsmotor bzw. der Steuereinrichtung als Puffer vorgesehen sind. Dabei kann es sich insbesondere um Kondensatoren handeln. Deren Dimensionierung ist in wesentlichem Maße von der Größe auftretender Stromstöße abhängig.

Erfindungsgemäß wird nun gerade diese erste, kritische Phase des Bremszyklus entspannt, indem während des ersten Zeitabschnitts die Verzögerung mittels einer Kurzschlussbremsung erfolgt. Anschließend an den ersten Zeitabschnitt schließt sich der zweite Zeitabschnitt, die Gegenbestromung, an. Der bis dahin erfolgte Abbau von Energie im System, insbesondere in den Erregerwicklungen, kann dazu beitragen, die sich nun ergebenden Maximalwerte für Strom und Spannung auf ein Maß zu reduzieren, das übermäßige Bauteilbelastungen vermeidet.

Es versteht sich dabei, dass der erste Zeitabschnitt und der zweite Zeitabschnitt mittelbar oder unmittelbar herangezogen oder bestimmt werden können. Insbesondere können der erste Zeitabschnitt und der zweite Zeitabschnitt etwa auch über Drehwinkel des Antriebsmotors oder eines von diesem angetriebenen Werkzeugs verkörpert sein. Es kann sich dabei ebenso auch um Drehwinkel des rotierenden Erregerfeldes handeln. Das Erregerfeld kann etwa bei einer Mehrzahl von Polpaaren mit einem Vielfachen der mechanischen Drehzahl rotieren.

Die bewusste Kombination der Verzögerung mittels Kurzschluss und der Verzögerung mittels Gegenbestromung ermöglicht die Realisierung von Zusatzfunktionalitäten, ohne zusätzliche Bauteile vorsehen zu müssen. Es kann sich dabei etwa um eine Not-Aus-Funktion, eine Endlagenabschaltung, ebenso auch um eine Auslaufbremse handeln. Trotz erweitertem Funktionsumfang kann dabei die Bauteilbelastung gering ausfallen und somit eine gewünschte Lebensdauer des Handwerkzeugs gewährleistet werden.

Hierdurch können etwa mechanische oder elektromechanische Bremsen oder Kupplungen ersetzt oder aber um eine erweiterte Bremsfunktionalität ergänzt werden.

Gemäß einer Weiterbildung der Erfindung ist die Dauer eines Bremszyklus summarisch aus dem ersten Zeitabschnitt und dem zweiten Zeitabschnitt gebildet, wobei der zweite Zeitabschnitt maximal 95 % der Dauer, vorzugsweise maximal 75 % der Dauer umfasst.

Auch dabei versteht sich, dass statt der Zeitabschnitte ebenso Drehwinkelabschnitte herangezogen werden können.

Grundsätzlich kann es angestrebt sein, den ersten Zeitabschnitt, bei dem der Antriebsmotor kurzgeschlossen ist, möglichst kurz zu gestalten, um schnell zum zweiten Zeitabschnitt übergehen zu können, bei dem dann die Gegenbestromung erfolgt. Auf diese Weise kann die Bremswirkung maximiert werden.

So kann es weiter bevorzugt sein, dass der erste Zeitabschnitt maximal 15 % der Dauer, vorzugsweise maximal 10 % der Dauer, weiter bevorzugt maximal 5 % der Dauer des Bremszyklus umfasst.

Ist hingegen eine möglichst geringe Bauteilbeanspruchung angestrebt, so kann ein deutlich längerer erster Zeitabschnittangestrebt sein. Ebenso kann der erste Zeitabschnitt vorteilhaft innerhalb eines vorgegebenen Intervalls abhängig von vorherrschenden Betriebsbedingungen gewählt werden.

Gemäß einem weiteren Aspekt der Erfindung umfasst der erste Zeitabschnitt mindestens 5 % der Dauer, vorzugsweise mindestens 25 % der Dauer.

Es versteht sich dabei, dass sich der erste Zeitabschnitt und der zweite Zeitabschnitt, bzw. zu diesen äquivalente Drehwinkelwerte, zu 100 %, also der Gesamtdauer eines Bremszyklus, ergänzen können. Ebenso ist vorstellbar, dass sich der erste Zeitabschnitt und der zweite Zeitabschnitt nicht genau zu 100 % der Dauer des Bremszyklus ergänzen können, etwa wenn notwendige Leerlaufzeiten oder Schaltzeiten hinzugerechnet werden.

Möglichst hohe Anteile des zweiten Zeitabschnitts an der Dauer des Bremszyklus bewirken einerseits eine hohe Verzögerung, führen andererseits jedoch zu einer Zunahme der Bauteilbelastung. Bei bestimmten Funktionen, etwa der Not-Aus-Funktion, die nicht regelmäßig genutzt bzw. abgerufen werden, kann der zweite Zeitabschnitt bewusst groß gewählt werden, um eine möglichst wirksame Bremsung erzielen zu können.

Insofern kann es weiter bevorzugt sein, dass der zweite Zeitabschnitt mindestens 85 % der Dauer, vorzugsweise mindestens 90 % der Dauer, weiter bevorzugt mindestens 95 % der Dauer umfasst.

Auch dabei können Spitzenwerte für Strom und Spannung vermieden werden, jedoch kann der hohe Anteil der Gegenbestromung am Gesamtbremsvorgang eine sehr hohe Verzögerung bewirken, welche sich nur unwesentlich von einer möglichen Verzögerung bei reiner Gegenbestromung unterscheidet.

Gemäß einer weiteren Ausgestaltung der Erfindung ist der Antriebsmotor ein elektronisch kommutierter Elektromotor, wobei die Dauer eines Bremszyklus der Dauer eines Kommutierungsintervalls entspricht.

Insbesondere bei elektronisch kommutierten Elektromotoren, etwa sogenannten EC-Motoren oder BLDC-Motoren, kann die Bremsung durch ohnehin vorhandene Bauteile initialisiert und gesteuert werden. Dabei erlaubt die bei einem elektronisch kommutierten Elektromotor zu berücksichtigende direkte oder indirekte Lageerfassung beispielsweise die Bestimmung von Drehwinkeln oder der Drehrichtung. Dies kann insbesondere dann von Vorteil sein, wenn der Antriebsmotor bis zum Stillstand gebremst werden soll. Erfolgt der Stillstand etwa dann, wenn der Antriebsmotor gegenbestromt ist, so würde der Antriebsmotor grundsätzlich bei weiter anliegender Gegenbestromung eine Rückwärtsbewegung aufnehmen.

Insofern kann es weiter bevorzugt sein, kurz vor dem Stillstand oder kurz vor einer Zieldrehzahl bzw. einer zu erzielenden Winkelgeschwindigkeit von der Gegenbestromung zu einer Kurzschlussbremsung überzugehen, um ein "Überschwingen" zu vermeiden.

Elektronisch kommutierte Elektromotoren können etwa mit einem sinusförmigen Signalverlauf, einem blockförmigen Signalverlauf oder aber einem pulsweitenmodulierten Signal beaufschlagt werden, um das Erregerdrehfeld zu erzeugen. Bei einem blockförmigen Signal ist etwa vorgesehen, an einer Erregerwicklung während eine Kommutierungsintervalls ein konstantes High-Signal und während eines darauf folgenden Kommutierungsintervalls ein konstantes Low-Signal oder ein Null-Signal anzulegen. Bei einer Kommutierung mit einem pulsweitenmodulierten Signal kann beispielsweise ein sinusförmiger Verlauf approximiert werden.

Insbesondere bei einer Steuereinrichtung mit einer Motorsteuerung, die dazu ausgebildet ist, den Antriebsmotor mit einem pulsweitenmodulierten Signal anzusteuern, kann die Steuerung des Bremsvorgangs und die hierfür notwendige Erfassung des Zustands des Antriebsmotors ohne wesentlichen Mehraufwand grundsätzlich durch bereits vorhandene Komponenten erfolgen.

Gemäß einem weiteren Aspekt der Erfindung weist die Energieversorgungseinrichtung eine Akkumulator, insbesondere einen Nickel-Cadmium-Akkumulator, einen Lithium-Ionen-Akkumulator, einen Lithium-Polymer-Akkumulator oder einen Nickel-Metallhydrid-Akkumulator, auf.

Gerade bei Handwerkzeugen, bei denen die Energieversorgungseinrichtung auch eine Energiespeichereinrichtung umfasst, kann ein Bremsvorgang, bei dem eine Kurzschlussbremsung und eine Gegenstrombremsung kombiniert sind, dazu beitragen, den Verschleiß der Energiespeichereinrichtung zu verringern und deren Lebensdauer zu maximieren.

Wie eingangs erwähnt, kann es zwar grundsätzlich von Vorteil sein, die bei der Verzögerung mittels Gegenbestromung auftretende Rückspeisung zu nutzen, um den Energiespeicher aufzuladen. Jedoch können die damit einhergehenden Stromstöße den Energiespeicher bzw. eine Lade- und Entladesteuerung überlasten, beschädigen oder vorzeitig altern lassen.

Da gemäß der Erfindung derartige Überhöhungen durch die der Gegenbestromung vorgelagerte Kurzschlussbremsung gewissermaßen "abgeschnitten" werden, kann die Energieversorgungseinrichtung in besonderem Maße schonend betrieben werden.

Gemäß einer Weiterbildung der Erfindung ist die zumindest eine Betriebszustandsgröße mittelbar oder unmittelbar von einer Größe abgeleitet, die aus der Gruppe ausgewählt ist, die aus anliegender Spannung oder Stromaufnahme des Antriebsmotors, Ladezustand oder Entladezustand des Akkumulators, Antriebsgeschwindigkeit, Antriebsbeschleunigung, Abtriebsgeschwindigkeit, Abtriebsbeschleunigung, Antriebsmoment, Abtriebsmoment, Drehwinkel, Eindring- oder Bearbeitungstiefe, Schwingungs- oder Vibrationsexposition, Halte- oder Reaktionsmoment des Handwerkzeugs. Einschaltzustand oder Betriebsart des Handwerkzeugs und Betriebstemperatur des Handwerkzeugs besteht.

Somit kann die Bremsprozedur zustandsabhängig ausgelöst werden, um eine erweiterte Funktionalität des Handwerkzeugs zu ermöglichen.

Es ist dabei vorstellbar, etwa abhängig vom Zustand des Akkumulators die Dauer des ersten Zeitabschnitts bzw. die Dauer des zweiten Zeitabschnitts zu variieren, beispielsweise um bei einem nahezu vollgeladenen Akkumulator mit der Rückspeisung einhergehende Ströme zu begrenzen. Dabei kann etwa ein Kapazitätsverlust bzw. ein Lebensdauerverlust des Akkumulators vermieden werden.

Erfolgt die Variation der Bremsprozedur anhand des Momentanzustands des Antriebsmotors, kann unterschieden werden, ob eine Bremsung aus einem Leerlaufbetrieb oder einem Volllastbetrieb des Antriebsmotors erfolgt, und dementsprechend die Dauer des ersten Zeitabschnitts und des zweiten Zeitabschnitts angepasst werden.

Erfolgt die Einleitung der Bremsprozedur hingegen abhängig von kinematischen Größen am Antrieb oder am Abtrieb, kann ein Bremsvorgang abhängig vom Arbeitsfortschritt eingeleitet werden. So kann etwa bei einem Schrauber ein Rückgang der Abtriebsgeschwindigkeit bzw. der Abtriebsdrehzahl als Indikator für das Anliegen eines Schraubenkopfes am Werkstück, mithin für das Ende eines Schraubvorgangs, herangezogen werden.

Es versteht sich, dass gerade auch bei einem Schrauber der Arbeitsfortschritt alternativ oder zusätzlich durch Messung des Antriebsmoments, des Abtriebsmoments oder des dazu proportionalen Stroms erfasst werden kann. Ein abrupter Momentenanstieg kann dabei das Ende eines Schraubvorgangs anzeigen.

Ebenso ist vorstellbar, einen Schrauber mit einem Anschlag zu versehen, der über separate Sensoren den Schraubvorgang überwachen und von der Steuereinrichtung zur Detektion des Endes des Schraubvorgangs genutzt werden kann.

Ein derartiger Tiefenanschlag kann ebenso vorteilhaft bei einem Bohrwerkzeug zur Anwendung gelangen, um das Erreichen bestimmter Bearbeitungstiefen anzuzeigen.

Die Erfassung von Schwingungswerten bzw. Vibrationswerten als mögliche Signale für das Einleiten des Bremsvorgangs kann etwa dazu genutzt werden, ein Bauteilversagen zu erkennen, bei dem sich im Regelfall die Gesamtsteifigkeit des Handwerkzeugs und damit einhergehend das wahrnehmbare Vibrationsniveau ändern kann.

Mit einer Überwachung des Halte- oder Reaktionsmoments des Handwerkzeugs kann ferner ein Rückschlag oder ein drohender Rückschlag des Handwerkzeugs bei blockiertem Werkzeug erkannt werden und über den Bremsvorgang der Momenteneintrag vom Antriebsmotor reduziert bzw. unterbrochen werden.

Die Erfassung der Abtriebsdrehzahl oder der Abtriebsgeschwindigkeit beziehungsweise einer diese charakterisierenden Größe kann in Kombination mit der Erfassung des Einschaltzustands des Handwerkzeugs dazu genutzt werden, einen sogenannten Nachlauf festzustellen und durch einen Bremsvorgang zu verkürzen. Schnelldrehende Handwerkzeuge mit hoher kinetischer Energie beziehungsweise mit einer hohen Trägheit im Abtrieb laufen häufig auch nach einen Ausschalten lange nach, ehe das Werkzeug zum Stillstand gelangt. Dies kann etwa bei Winkelschleifern der Fall sein. Ein Bediener sollte daher das Handwerkzeug auch nach dem unmittelbaren Abschalten noch eine gewisse Zeit kontrolliert halten oder führen, den Werkzeugstillstand abwarten und das Werkzeug erst danach ablegen, um unkontrollierbare Betriebszustände oder Eigenbewegungen vermeiden zu können. Mittels einer angepassten Bremsprozedur kann eine Nachlaufbremse realisiert und die Zeit bis zum Werkzeugstillstand deutlich verkürzt werden.

Schließlich kann die Betriebstemperatur des Handwerkzeugs, etwa eines Getriebes oder des Antriebsmotors, überwacht werden, um hohe Belastungen bzw. Überlastungen erkennen zu können und zum Schutz des Handwerkzeugs eine Verzögerung einzuleiten. Dies kann insbesondere bei einem lang andauernden Betrieb des Handwerkzeugs von Vorteil sein.

Es versteht sich, dass die Bremsprozedur abhängig von der aktuell als Auslöser des Bremsvorgangs herangezogenen Größe unterschiedlich gestaltet sein kann. So kann etwa bei sicherheitsrelevanten Vorgängen eine besonders hohe Verzögerung erwünscht sein, auch wenn dies u.U. mit einer erhöhten Belastung des Antriebsmotors, der Steuereinrichtung oder der Energieversorgungseinrichtung einhergehen kann. Finden hingegen "normale" Verzögerungen statt, so können die Anteile der Kurzschlussbremsung bzw. der Gegenbestromung derart verteilt werden, dass sich eine möglichst geringe Bauteilbelastung ergibt.

Gemäß einer weiteren Ausgestaltung der Erfindung ist die Steuereinrichtung dazu ausgebildet, anhand der Dauer eines vorherigen Kommutierungsintervalls die Dauer des ersten Zeitabschnitts und damit die Dauer des zweiten Zeitabschnitts derart abzuleiten, dass Maximalwerte für Strom oder Spannung nicht überschritten werden.

Da eine Verzögerung nur mit endlichen Beschleunigungen einhergeht, kann bei üblichen Nenndrehzahlen des Antriebsmotors ohne Weiteres von der Dauer des unmittelbar vorhergehenden Kommutierungsintervalls oder eines noch weiter vorhergehenden Kommutierungsintervalls auf die Dauer des aktuellen Kommutierungsintervalls geschlossen werden. Dies ist vorrangig durch die Trägheit des Antriebsmotors bzw. eines mit diesem gekoppelten Werkzeugs bedingt.

Eine geeignete Kombination des ersten Zeitabschnitts und der zweiten Zeitabschnitts während der Bremsprozedur kann es ferner erlauben, eine nahezu lineare Verzögerung realisieren zu können. Dabei kann die Verzögerung bis zum Werkzeugstillstand oder einer neuen Abstriebsgeschwindigkeit bei nahezu konstanter (negativer) Beschleunigung bewirkt werden. Die Vermeidung von Beschleunigungsspitzen kann dazu beitragen, Bauteilbelastungen zu minimieren.

Anhand der erfassten Betriebszustandsgrößen kann ermittelt bzw. abgeleitet werden, welche Maximalwerte für Strom oder Spannung sich etwa bei einem Bremsvorgang ausschließlich mittels Gegenbestromung ergeben würde. Diese Werte können mit Referenzwerten, welche einerseits fest hinterlegt, andererseits ebenso von den erfassten Betriebszustandsgrößen abgeleitet sein können, verglichen werden. Hiernach kann die Dauer des ersten Zeitabschnitts, also der Kurzschlussbremsung, sowie die Dauer des zweiten Zeitabschnitts, also der Gegenbestromung, festgelegt werden, um die angestrebten Maximalwerte einhalten zu können.

Gemäß einem weiteren Aspekt der Erfindung ist der Antriebsmotor als permanenterregter Motor mit elektronischer Kommutierung ausgebildet.

Hierbei kann es sich etwa um eine Blockkommutierung handeln. Es versteht sich dabei, dass der Verlauf etwa der Erregerspannung dabei in der Praxis keine ideal steilen Flanken, also eine unendlich schnelle Änderung des Spannungsniveaus, aufweisen muss. Üblicherweise verläuft die Erregerspannung etwa trapezförmig mit leicht geneigten Flanken. Auch eine Sinuskommutierung ist denkbar.

Derart ausgestaltet, kann sich ein leistungsfähiger, hochdynamischer und mit überschaubarem Bauteilaufwand und Steuerungsaufwand regelbarer Motor ergeben.

Ebenso ist vorstellbar, mittels Pulsweitenmodulation einen sinusähnlichen Verlauf der Erregerspannung zu ermöglichen. Dabei kann beispielsweise der Gleichlauf des Antriebsmotors optimiert werden.

Dementsprechend können auch bei der Bremsung Spannungsverläufe blockförmig bzw. trapezförmig ausgebildet sein, oder aber einen pulsweitenmodulierten Signalverlauf aufweisen.

Gemäß einer weiteren Ausgestaltung der Erfindung weist der Antriebsmotor einen permanenterregten Rotor auf, dem zumindest ein Positionsgeber, vorzugsweise ein Hall-Sensor, zur Erfassung der Position des Rotors zugeordnet ist.

Damit wird etwa eine Lageerfassung, eine Drehrichtungserfassung sowie eine Geschwindigkeitserfassung ermöglicht. Auch diese Betriebszustandsgrößen können zum Einleiten der Bremsprozedur bzw. zur Bestimmung der Dauer des ersten Zeitabschnitts und des zweiten Zeitabschnitts herangezogen werden.

Dabei kann der Positionsgeber eine Mehrzahl von Hall-Sensoren, insbesondere drei Hall-Sensoren, umfassen. Die Hall-Sensoren können dabei die Position anhand eines Magnetfelds des permanenterregten Rotors oder aber einer separat vorgesehenen Sensorscheibe erfassen.

Andere Arten der Positionserfassung sind denkbar, etwa Lichtschranken oder dergleichen. Die Drehzahl des Antriebsmotors kann alternativ oder zusätzlich etwa über einen Tacho-Generator ermittelt werden.

Gemäß einer alternativen Ausgestaltung der Erfindung ist die Steuereinrichtung zur mittelbaren Erfassung der Position des Rotors über die Gegeninduktion einer Erregerwicklung des Antriebsmotors ausgebildet.

Auf diese Weise kann die Lageerfassung ohne separate Geber erfolgen. Es wird dabei etwa die Gegeninduktion einer momentan nicht von der Steuereinrichtung erregten Erregerwicklung gemessen. Diese Art der Positionsbestimmung bietet sich insbesondere dann an, wenn keine hochgenaue Lageerfassung erforderlich ist. Es ist dabei zu beachten, dass insbesondere beim Anlauf des Antriebsmotors Vorkehrungen zur Sicherstellung der beabsichtigten Drehrichtung zu treffen sind.

Gemäß einem weiteren Aspekt der Erfindung weist der Antriebsmotor eine Mehrzahl von Wicklungen zur Erzeugung eines den Rotor antreibenden Drehfeldes auf, wobei die Wicklungen in Sternschaltung oder in Dreieckschaltung ansteuerbar sind.

Auf diese Weise kann etwa das Anlaufen oder Hochlaufen des Elektromotors unterstützt werden. Bei der Sternschaltung lassen sich grundsätzlich höhere Drehmomente, bei der Dreieckschaltung höhere Drehzahlen bewirken.

Bei der Dreieckschaltung kann eine sensorlose Kommutierung, also eine Kommutierung, bei der keine separaten Geber zur Lageerfassung berücksichtigt sind, unter Hinzunahme eines sogenannten virtuellen Sternpunkts erfolgen. Ein virtueller Sternpunkt kann auch bei einer Sternschaltung genutzt werden, bei der der Sternpunkt nicht an die Lageerfassung gekoppelt ist.

Gemäß einer weiteren Ausgestaltung der Erfindung ist die Steuereinrichtung dazu ausgebildet, während eines Bremszyklus einen mehrmaligen Wechsel zwischen dem ersten Zeitabschnitt und dem zweiten Zeitabschnitt, vorzugsweise zwischen dem ersten Zeitabschnitt, dem zweiten Zeitabschnitt sowie einer Freilaufphase, zu bewirken.

Auf diese Weise kann der Bremsvorgang noch besser geregelt werden. Vorteilhaft erfolgt dabei die Ansteuerung der Erregerwicklungen, sowohl zum Antrieb als auch zur Verzögerung, auf Basis eines pulsweitenmodulierten Signals.

Während der Freilaufphasen ist der Antriebsmotor weder bestromt noch kurzgeschlossen, so dass sich im Wesentlichen eine freie Drehung aufgrund der vorhandenen kinetischen Energie ergeben kann.

So kann sich während des Bremszyklus beispielsweise die Kurzschlussbremsung mehrfach mit der Gegenbestromung sowie gegebenenfalls mit Freilaufphasen abwechseln, so dass insgesamt der erste Zeitabschnitt und der zweite Zeitabschnitt während des Bremszyklus in mehrere, sich abwechselnde Phasen unterteilt sind.

Damit einhergehend kann etwa eine Erfassung der Momentanwerte für Strom oder Spannung und dementsprechend eine Anpassung des Bremsvorgangs erfolgen.

So kann der Bremszyklus von einer kurzen Phase einer Kurzschlussbremsung eingeleitet werden, die von einer Phase der Gegenbestromung abgelöst wird. Auf diese Weise kann eine möglichst hohe Verzögerung bewirkt werden. Wird dabei jedoch festgestellt, dass eine Überschreitung der Maximalwerte für Strom oder Spannung droht, so kann die Gegenbestromung erneut bzw. wiederholt von Phasen der Kurzschlussbremsung unterbrochen werden.

Damit kann insgesamt eine bedarfsgerechte, an Momentanzustände des Handwerkzeugs anpassbare Bremsung erfolgen, die die Leistungsfähigkeit und die Lebensdauer des Elektrowerkzeugs, aber auch die Bedienersicherheit berücksichtigt.

Gemäß einem weiteren Aspekt der Erfindung ist die Steuereinrichtung dazu ausgebildet, während des ersten Zeitabschnitts oder des zweiten Zeitabschnitts eine pulsweitenmodulierte Bestromung oder einen pulsweitenmodulierten Kurzschluss des Antriebsmotors zu bewirken.

Somit kann innerhalb der Zeitabschnitte eine noch bessere Regelung des Bremsvorgangs erfolgen, indem die Gegenbestromung beziehungsweise der Wicklungskurzschluss lediglich während bestimmter Unterabschnitte eines Zeitabschnitts aktiv geschaltet werden. Wird dabei die Höhe der Modulationsfreuenz in geeigneter Weise gewählt, so sind einzelne Modulationsintervalle für die beteiligten Komponenten nicht "sichtbar" beziehungsweise auflösbar. Die Nutzung derartiger "Trägheitseffekte" kann weiter dazu beitragen, die Bauteilbelastungen, insbesondere Belastungen durch Spannungsüberhöhungen, auf ein gewünschtes Maß zu reduzieren.

Das erfindungsgemäße Verfahren wird dadurch weitergebildet, dass die zumindest eine Betriebszustandsgröße mittelbar oder unmittelbar von einer Größe abgeleitet wird, die aus der Gruppe ausgewählt ist, die aus anliegender Spannung oder Stromaufnahme des Antriebsmotors, Ladezustand oder Entladezustand des Akkumulators, Antriebsgeschwindigkeit, Antriebsbeschleunigung, Abtriebsgeschwindigkeit, Abtriebsbeschleunigung, Antriebsmoment, Abtriebsmoment, Drehwinkel, Eindring- oder Bearbeitungstiefe, Schwingungs- oder Vibrationsexposition, Halte- oder Reaktionsmoment des Handwerkzeugs, Einschaltzustand oder Betriebsart des Handwerkzeugs und Betriebstemperatur des Handwerkzeugs besteht.

Gemäß einem weiteren Aspekt des Verfahrens ist der Schritt des Bestimmens der Dauer des ersten Zeitabschnitts und damit der Dauer des zweiten Zeitabschnitts derart vorgesehen, dass Maximalwerte für Strom oder Spannung nicht überschritten werden, vorzugsweise ist dabei der Schritt des Erfassens der Dauer eines vorherigen Kommutierungsintervalls als Referenzdauer vorgesehen.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnungen. Es zeigen:
- Fig. 1: eine schematische Darstellung eines erfindungsgemäßen Handwerkzeugs;
- Fig. 2: eine vereinfachte schematische Darstellung einer mit einem Antriebsmotor gekoppelten Steuereinrichtung;
- Fig. 3: den Verlauf von Spannung und Strom über die Zeit bzw. den Drehwinkel in der Zuleitung zum Antriebsmotor bei einem Bremsvorgang ausschließlich mittels Gegenbestromung;
- Fig. 4: den Verlauf von Spannung und Strom über die Zeit bzw. den Drehwinkel in der Zuleitung zum Antriebsmotor bei einem Bremsvorgang mit einem ersten Zeitabschnitt von ungefähr 25 % und einem zweiten Zeitabschnitt von ungefähr 75 % der Dauer eines Bremszyklus;
- Fig. 5: den Verlauf von Spannung und Strom über die Zeit bzw. den Drehwinkel in der Zuleitung zum Antriebsmotor bei einem Bremsvorgang mit einem ersten Zeitabschnitt von ungefähr 50 % und einem zweiten Zeitabschnitt von ungefähr 50 % der Dauer eines Bremszyklus;
- Fig. 6: den Verlauf von Spannung und Strom über die Zeit bzw. den Drehwinkel in der Zuleitung zum Antriebsmotor bei einem Bremsvorgang ausschließlich mittels Kurzschlussbremsung; und
- Fig. 7: den Verlauf der Drehzahl des Antriebsmotors über die Zeit bzw. den Drehwinkel bei verschiedenen Bremsvorgängen mit Bremszyklen mit verschiedenen Anteilen von Kurzschlussbremsung und Gegenbestromung.

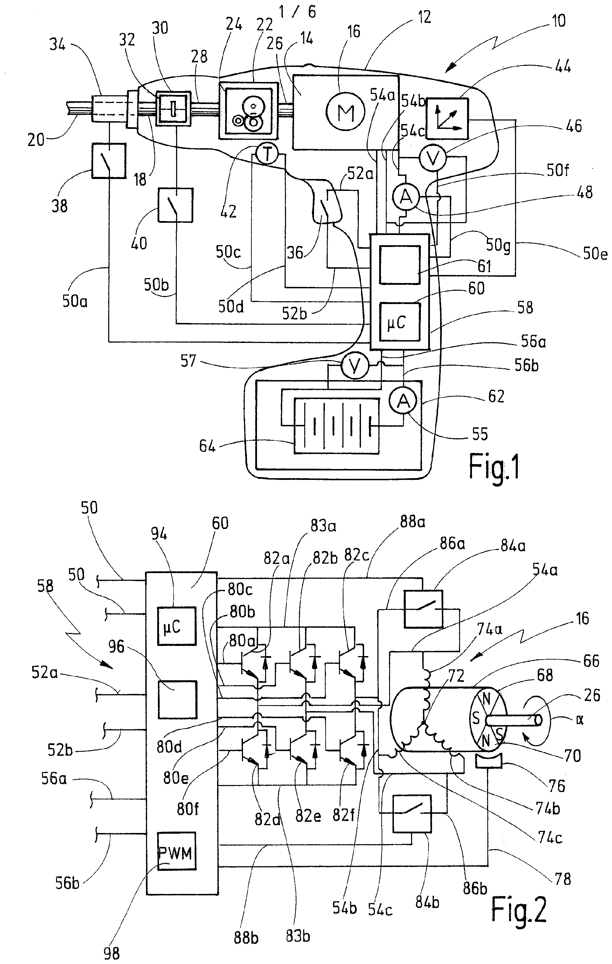

In Fig. 1 ist ein erfindungsgemäßes Handwerkzeug vereinfacht schematisch dargestellt und insgesamt mit 10 bezeichnet.

Das Handwerkzeug 10 weist ein Gehäuse 12 auf, in dem ein Antrieb 14 mit einem Antriebsmotor 16 aufgenommen ist. Der Antrieb 14 ist über einen Abtrieb 18 mit einem Werkzeug 20 (nicht vollständig dargestellt) gekoppelt. Dem Antrieb 14 sowie dem Abtrieb 18 sind ferner eine Übertragungseinrichtung 22, vorliegend mit einem Getriebe 24, eine Motorwelle 26, eine Getriebewelle 28 sowie eine Eingriffseinrichtung 30, vorliegend mit einer Kupplung 32, zwischengeschaltet.

Das Handwerkzeug 10 ist in Fig. 1 beispielhaft als Schraubwerkzeug oder als Bohrwerkzeug dargestellt. Es versteht sich jedoch, dass es sich dabei auch um ein Werkzeug zum Schleifen, Polieren, Sägen, Schneiden, Hämmern oder dergleichen handeln könnte, welches mit den gleichen oder ähnlichen Komponenten versehen sein kann.

Es ist ferner anzumerken, dass die Darstellung gemäß Fig. 1 eine mögliche Maximalkonfiguration des Handwerkzeugs 10 darstellt, anhand derer die Erfindung erläutert wird. Im praktischen Einsatz kann das Handwerkzeug 10 je nach Anwendung und Einsatzbedingungen regelmäßig eine geringere, überschaubarere Anzahl Komponenten aufweisen, die erfindungsgemäß zur Verzögerung des Handwerkzeugs 10 zusammenwirken.

Ein Bediener kann das Handwerkzeug 10 in einem Griffbereich greifen und über einen Betätigungsschalter 36 aktivieren bzw. deaktivieren.

Insbesondere bei Verwendung des Handwerkzeugs 10 als Schraubwerkzeug oder Bohrwerkzeug kann eine Tiefenbegrenzung 34 vorgesehen sein, die dazu ausgebildet ist, eine Eindringtiefe oder eine Einschraubtiefe zu begrenzen. Die Tiefenbegrenzung 34 kann hierfür mit einem Signalgeber 38 gekoppelt sein, der einer Steuereinrichtung 58 ein Signal zuführen kann. Die Tiefenbegrenzung 34 kann dabei etwa über einen vorgegebenen Anschlag auslösen, oder aber Elemente zur Drehmomenterfassung aufweisen und abhängig vom Schraubmoment oder Bohrmoment ein Signal ausgeben. Eine Steuerung des Arbeitsfortschritts mittels Drehmomentüberwachung erfolgt insbesondere beim Gebrauch des Handwerkzeugs 10 als Schraubwerkzeug. Dabei erfolgt im Regelfall eine Erfassung des Einschraubmoments, um anhand eines zu erwartenden Momentenanstiegs am Ende des Schraubvorgangs den Antrieb 14 abzubremsen oder vom Abtrieb 18 zu entkoppeln.

Je schneller und präziser dabei der Antrieb 14 gebremst werden oder aber vom Abtrieb 18 entkoppelt werden kann, desto schneller kann der Schraubvorgang insgesamt unter Gewährleistung einer notwendigen Qualität der Verschraubung ablaufen. Es ist vorstellbar, die Entkopplung des Antriebs 14 vom Abtrieb 18 mittels der Eingriffseinrichtung 30, insbesondere etwa einer Schaltkupplung 32, zu bewerkstelligen. Soll jedoch ein derartiger konstruktiver Aufwand vermieden werden, so ist anzustreben, den Antrieb 14 in möglichst kurzer Zeit nach Erreichen eines Auslösemoments beim Einschraubvorgang abzubremsen, um ein Überdrehen und damit eine mögliche Vorschädigung der Schraubverbindung vermeiden zu können.

Wie oben bereits angeführt, stellt Fig. 1 eine mögliche Maximalkonfiguration des Handwerkzeugs 10 dar. Hierbei ist die Steuereinrichtung 58 mit einer Mehrzahl von Signalgebern 38, 40, 42, 44, 46, 48 gekoppelt. Während der Signalgeber 38 dazu ausgebildet ist, eine Betriebszustandsgröße, die an der Tiefenbegrenzung 34 ermittelt wird, der Steuereinrichtung 58 über eine Signalleitung 50a zuzuführen, ist der Signalgeber 40 mit der Eingriffseinrichtung 30 gekoppelt. Der Signalgeber 40 ist dazu ausgebildet, einen Betriebszustand der Eingriffseinrichtung 30 oder der Kupplung 32 zu erfassen und über eine Signalleitung 50b an die Steuereinrichtung 58 zu übermitteln. Dabei kann es sich etwa um ein Signal handeln, das einen offenen Zustand, einen geschlossenen Zustand oder aber einen Rutschzustand der Kupplung 32 kennzeichnet.

Insbesondere wenn die Eingriffseinrichtung 30 eine Rutschkupplung aufweist, kann der Signalgeber 40 genutzt werden, um den Rutschzustand zu erfassen und hiernach die Steuereinrichtung 58 anzusteuern, um den Antrieb 14 schnell abzubremsen, um Bauteilbeschädigungen bei der Eingriffseinrichtung 30 vermeiden zu können.

Ein weiterer Signalgeber 42 ist als Temperatursensor angedeutet und am oder im Gehäuse 12 des Handwerkzeugs 10 aufgenommen. Vorliegend ist der Signalgeber 42 in der Nähe der Übertragungseinrichtung 22 angeordnet. Die Übertragungseinrichtung 22, vorrangig das Getriebe 24, kann etwa bei Dauerlast eine beträchtliche Erwärmung erfahren, die gegebenenfalls zu erhöhtem Bauteilverschleiß führen kann. Ähnliches kann bei der Eingriffseinrichtung 30, beim Antriebsmotor 16, bei der Steuereinrichtung 58 oder aber bei einer Energieversorgungseinrichtung 62 (siehe unten) auftreten. So kann der Signalgeber 42 dazu ausgebildet sein, das Überschreiten einer Maximaltemperatur zu erkennen und über Signalleitungen 50c, 50d an die Steuereinrichtung 58 zu übermitteln, so dass eine Verzögerung des Antriebsmotors 16 eingeleitet werden kann. Auch dabei kann ein übermäßiger Verschleiß oder eine Beschädigung des Handwerkzeugs 10 vermieden werden.

Der Signalgeber 44 ist vorliegend als Beschleunigungssensor angedeutet und über eine Signalleitung 50e mit der Steuereinrichtung 58 gekoppelt. Der Signalgeber 44 kann Vibrationswerte oder Schwingungswerte erfassen, die den Betriebszustand des Handwerkzeugs 10 kennzeichnen. Damit kann der vom Bediener wahrnehmbare Vibrationspegel ermittelt werden.

Der Steuereinrichtung 58 und dem Antrieb 14 bzw. dem Antriebsmotor 16 sind Steuerleitungen 54a, 54b, 54c zwischengeschaltet, die der Erregung des Antriebsmotors 16 dienen. Beispielhaft weist die Steuerleitung 54c einen Signalgeber 48 auf, der etwa als Amperemeter angedeutet ist. Ebenso beispielhaft ist den Steuerleitungen 54b und 54c ein Signalgeber 46 in Form eines Voltmeters zwischengeschaltet. Der Signalgeber 48 ist über eine Signalleitung 50g, der Signalgeber 46 über eine Signalleitung 50f mit der Steuereinrichtung 58 verbunden. Die Signalgeber 46, 48 sind dazu ausgebildet, Momentanwerte und Maximalwerte für Strom und Spannung zu erfassen, die zur Steuerung der Verzögerung des Antriebsmotors 16 herangezogen werden können.

Das Handwerkzeug 10 weist ferner eine Energieversorgungseinrichtung 62 auf, die über Versorgungsleitungen 56a, 56b mit der Steuereinrichtung 58 gekoppelt ist. Ferner sind ein Signalgeber 55 in Form eines Amperemeters sowie ein Signalgeber 57 in Form eines Voltmeters mit den Versorgungsleitungen 56a, 56b gekoppelt, um Strom und Spannung erfassen zu können.

Daneben ist auch der Betätigungsschalter 36 über Schaltleitungen 52a, 52b mit der Steuereinrichtung 58 verbunden.

Die Steuereinrichtung 58 weist eine Motorsteuerung 60 und ein Betriebszustandserkennungsmodul 61 auf. Die Motorsteuerung 60 dient der Ansteuerung des Antriebsmotors 16 zur Erzeugung einer Antriebsbewegung sowie bedarfsweise zur kontrollierten Verzögerung des Antriebsmotors 16, wie in Zusammenhang mit Fig. 2 erläutert wird. Das Betriebszustandserkennungsmodul 61 ist dazu ausgebildet, insbesondere die durch die Signalgeber 38, 40, 42, 44, 46, 48 erfassten Signale aufzunehmen und auszuwerten, um abhängig davon bei Bedarf eine Bremsprozedur einzuleiten, bei der die Motorsteuerung 60 auf den Antriebsmotor 16 kontrolliert zu dessen Verzögerung einwirkt.

Hierfür kann das Betriebszustandserkennungsmodul 61 gegebenenfalls auch auf die von den Signalgebern 55, 57 erfassten Signale, die den Zustand der Energieversorgungseinrichtung 62 kennzeichnen, zugreifen.

Die Energieversorgungseinrichtung 62 weist einen Akkumulator 64 auf, der der Bereitstellung elektrischer Energie dient. Dieser kann etwa als Nickel-Cadmium-Akkumulator, Lithium-Ionen-Akkumulator oder als Lithium-Polymer-Akkumulator ausgebildet sein. Ferner kann eine Lade- und Entladesteuerung vorgesehen sein (nicht dargestellt), die Ladevorgänge, Entladevorgänge sowie den Betriebszustand des Akkumulators 64 überwachen und steuern kann. Derartige Aufgaben können alternativ ebenso von der Steuereinrichtung 58 abgedeckt sein.

Es versteht sich, dass die Energieversorgungseinrichtung 62 statt mit dem Akkumulator 64 ebenso mit externen Leitungen gekoppelt sein kann, um elektrische Energie aus einem Wechselstromnetz, vorzugsweise unter Verwendung eines Gleichrichters, bereitzustellen.

In Fig. 2 ist ein Ausschnitt der Steuereinrichtung 58 in einem stark vereinfachten Schaltbild dargestellt. Dabei ist die Motorsteuerung 60 dazu ausgebildet, ein Drehfeld zu erzeugen, um einen Rotor 66 des Antriebsmotors 16 anzutreiben. Der Rotor 66 kann als permanenterregter Rotor mit einer Mehrzahl von Polpaaren 68, 70 ausgebildet sein. Vorliegend sind zwei Polpaare 68, 70 angedeutet. Eine Mehrzahl ist ohne Weiteres denkbar, insbesondere sind vier Polpaare am Rotor 66 bevorzugt. Der Rotor 66 ist ferner mit der Motorwelle 26 gekoppelt. Die beim Antrieb des Rotors 66 entstehende Drehbewegung führt zu einer Rotation a, wie durch einen gekrümmten Pfeil angedeutet.

Zur Erzeugung des Drehfeldes ist ferner eine Mehrzahl von Wicklungen 74a, 74b, 74c vorgesehen, die vorliegend über einen Stempunkt 72 verknüpft sind. Diese Wicklungen 74a, 74b, 74c können ohne Weiteres ebenso auch als Dreieck verschaltet sein, um das den Rotor 66 antreibende Drehfeld zu erzeugen.

Die Wicklungen 74a, 74b, 74c können über die Steuerleitungen 54a, 54b, 54c angesteuert werden, vergleiche auch Fig. 1. Bei einem elektronisch kommutierbaren Elektromotor 16 ist es erforderlich, das Drehfeld über die Motorsteuerung 60 zu bewirken. Eine derartige Ansteuerung der Wicklung 74a, 74b, 74c ermöglicht unter anderem den Verzicht auf Bürsten zur Kontaktierung, so dass der Antriebsmotor 16 insgesamt wartungsarm oder nahezu wartungsfrei gestaltet sein kann.

Zur Erfassung der Lage des Rotors 66 ist ein Positionsgeber 76 vorgesehen, der mit der Motorsteuerung 60 gekoppelt ist. Der Positionsgeber 76 kann etwa als Hall-Sensor ausgeführt sein, insbesondere eine Mehrzahl von Hall-Sensoren, etwa drei Hall-Sensoren, aufweisen. Der Positionsgeber 76 ist dazu ausgebildet, das Magnetfeld der Polpaare 68, 70 des Rotors 66, oder aber einer separat an der Motorwelle 26 vorgesehenen Sensorscheibe (nicht dargestellt) zur Lagebestimmung zu erfassen. Zur Kontaktierung des Positionsgebers 76 mit der Motorsteuerung 60 ist eine Positionsleitung 78 vorgesehen.

Zur Erzeugung des Drehfeldes weist die Motorsteuerung 60 eine Mehrzahl von Schaltgliedern 82a, 82b, 82c, 82d, 82e, 82f auf, die über Schaltleitungen 80a, 80b, 80c, 80d, 80e, 80f angesteuert werden können. In Abhängigkeit ihrer Verschaltung können die Schaltglieder 82 einzelne der Erregerwicklungen 74a, 74b, 74c selektiv etwa mit einem High-Signal, einem Low-Signal oder aber einem Null-signal beaufschlagen, um das Wechselfeld auszubilden. Das Signal kann grundsätzlich einen blockförmigen, einen sinusförmigen oder einen pulsweitenmodulierten Verlauf aufweisen. Bei den Schaltgliedern 82 kann es sich insbesondere um integrierte oder diskrete Leistungstransistoren handeln. Die Ausgänge der Schaltglieder 82 sind entsprechend mit den mit den Wicklungen 74a, 74b, 74c gekoppelten Steuerleitungen 54a, 54b, 54c verbunden.

Mit 83a und 83b sind Zuleitungen angedeutet, die die Schaltglieder 82 und damit auch den Antriebsmotor 16 mit elektrischer Energie versorgen. Die Zuleitungen 83a, 83b sind über die Steuereinrichtung 58 mittelbar oder unmittelbar mit den Versorgungsleitungen 56a, 56b gekoppelt.

In Fig. 2 sind ferner vereinfacht Kurzschlussschalter 84a, 84b angedeutet, die dazu ausgebildet sind, die Erregerwicklungen 74a, 74b, 74c miteinander kurzzuschließen. Der Kurzschlussschalter 84a ist dabei über die Kurzschlussleitung 86a mit der Erregerwicklung 74a sowie mit der Erregerwicklung 74c koppelbar, um diese kurzzuschließen. Der Kurzschlussschalter 84b ist dazu ausgebildet, die Erregerwicklung 74c über die Kurzschlussleitung 86b mit der Erregerwicklung 74b kurzzuschließen. In ähnlicher Weise können weitere Kurzschlussschalter vorgesehen sein, etwa um die Erregerwicklung 74a mit der Erregerwicklung 74b kurzzuschließen. Die Kurzschlussschalter 84a, 84b sind über Kurzschlusssteuerleitungen 88a, 88b ansteuerbar, die mit der Motorsteuerung 60 gekoppelt sind.

Es versteht sich dabei, dass die Kurzschlussschalter 84a, 84b und die Kurzschlussleitungen 86a, 86b lediglich veranschaulichend als separate Elemente dargestellt sind. Die Funktionalität der Kurzschlussschalter 84a, 84b kann gleichfalls von der Motorsteuerung 60, etwa unter Nutzung der Schaltleitungen 80a, 80b, 80c, 80d, 80e, 80f sowie der Schaltglieder 82a, 82b, 82c, 82d, 82e, 82f, bewerkstelligt werden.

Ebenso ist nachvollziehbar, dass bei einer Verschaltung der Erregerwicklungen 74a, 74b, 74c im Dreieck die Kurzschlussschalter 84a, 84b dazu ausgebildet und kontaktiert sein können, einzelne oder mehrere der im Dreieck verschalteten Erregerwicklungen 74 selektiv kurzschließen zu können, um in den Erregerwicklungen 74 gespeicherte Energie abbauen zu können.

Eingangsseitig sind der Motorsteuerung 60 eine Mehrzahl von Signalleitungen 50, die Schaltleitungen 52a, 52b, die mit dem Betätigungsschalter 36 gekoppelt sind, sowie die Versorgungsleitungen 56a, 56b, die mit der Energieversorgungseinrichtung 62 verbunden sind, zugeordnet.

Zur Realisierung der Ansteuerung sowie der Verzögerung des Antriebsmotors 16 weist die Motorsteuerung 60 ferner einen Prozessor oder eine Logikeinheit 94, eine Pulsweitenmodulationssteuerung 98 sowie einen Taktgeber 96 auf. Es versteht sich dabei, dass die genannten Bauteile ohne Weiteres gänzlich integriert oder aber diskret bei der Motorsteuerung 60 ausgeführt sein können.

Erfindungsgemäß ist das Handwerkzeug 10 dazu ausgebildet, abhängig von erfassten Betriebszuständen eine Verzögerung des Antriebsmotors 16 einzuleiten, die sowohl eine effektive, möglicht kurze Verzögerung, andererseits ebenso eine verringerte Bauteilbelastung zum Bewirken einer erhöhten Lebensdauer bewerkstelligen kann.

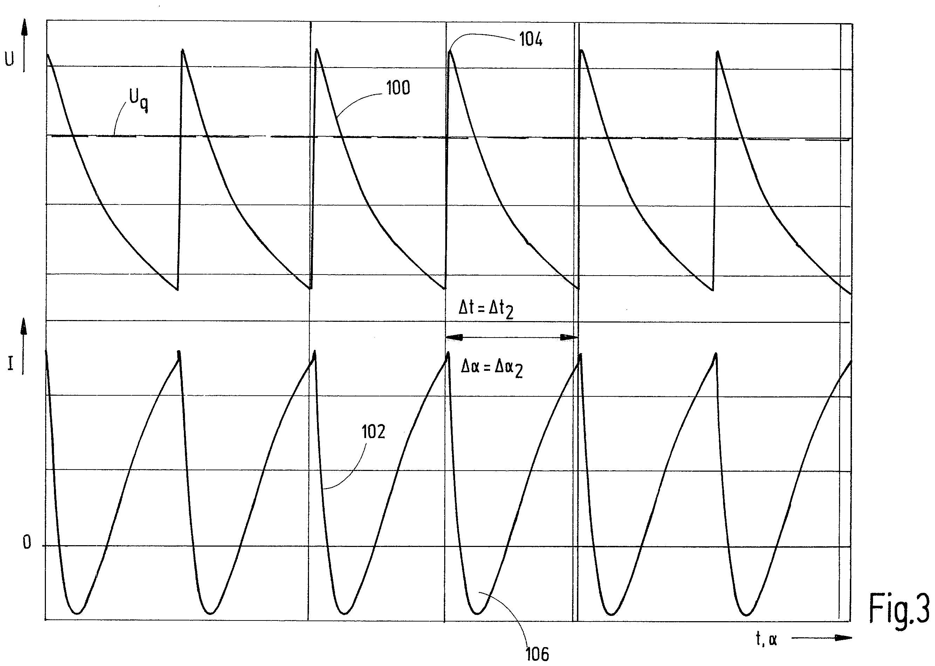

Anhand der Figuren 3 bis 5 wird die erfindungsgemäße Bremsprozedur näher beschrieben.

In den Figuren 3 bis 5 sind jeweils sechs Kommutierungsintervalle dargestellt, während derer eine Verzögerung erfolgt. Die sechs Kommutierungsintervalle können etwa einer elektrischen Umdrehung entsprechen, welche bei einer Mehrzahl von Polpaaren einem entsprechenden Bruchteil einer mechanischen Umdrehung des Rotors 66 entspricht. Beispielhaft können die sechs Kommutierungen bei insgesamt vier Polpaaren am Rotor 66 ein Viertel einer mechanischen Umdrehung des Rotors 66 beschreiben.

Die Maßstäbe in den Figuren 3 bis 5 sind grundsätzlich gleich, so dass die Absolutwerte der einzelnen Verläufe in den verschiedenen Figuren miteinander vergleichbar sind. Auf der Abszisse sind dabei jeweils die Zeit t sowie der Drehwinkel α aufgetragen. Die Ordinate weist die zugehörigen Momentanwerte der Spannung U sowie des Stroms I auf. Zur Orientierung ist ferner beim Stromverlauf die Nulllinie fett hervorgehoben, während beim Spannungsverlauf als Referenz die Quellenspannung bzw. Versorgungsspannung U_{q} fett gestrichelt hervorgehoben ist. Spannungswerte und Stromwerte können dabei etwa bei den Zuleitungen 83a, 83b erfasst sein. Die Dauer eines Kommutierungsintervalls, also etwa eines Bremszyklus, ist dabei jeweils mit Δt, die Dauer des ersten Zeitabschnitts, also der Kurzschlussbremsung, mit Δt₁ sowie die Dauer des zweiten Zeitabschnitts, also der Gegenbestromung, mit Δt₂ bezeichnet.

In Fig. 3 sind ein Spannungsverlauf 100 und ein Stromverlauf 102 über sechs Bremszyklen, also sechs Kommutierungsintervalle, angedeutet, die sich bei einem Bremsvorgang ergeben können, der auf reiner Gegenbestromung beruht. Da die Verzögerung generell aufgrund der Trägheiten des Rotors 66 bzw. des mit dem Antriebsmotor 16 gekoppelten Werkzeugs 20 nicht unendlich groß sein kann, kann in der Darstellung der Fig. 3 bis 5 zwischen einzelnen der dargestellten Intervalle noch keine Verzögerung erkannt werden. Dies ist vorrangig durch die hohe zeitliche Auflösung, welche lediglich einen Ausschnitt von sechs Kommutierungsintervallen zeigt, bedingt. Insofern kann bei der gewählten Auflösung die Zeit t näherungsweise mit dem Drehwinkel α gleichgesetzt werden.

Mit anderen Worten ist die Dauer Δt der einzelnen Kommutierungsintervalle in Fig. 3, Fig. 4 sowie Fig. 5 jeweils weitgehend identisch, da sich die Verzögerung erst bei anderen zeitlichen Auflösungen der Darstellung bemerkbar macht.

In den Fig. 3 bis 5 ist daher ferner neben der Zeit t bzw. den Zeitintervallen Δt, Δt₁, Δt₂ auch der Drehwinkel α mitsamt den Drehwinkelintervallen Δα, Δα₁, Δα₂ angedeutet. Im Rahmen der betrachteten Auflösung können die Zeitangaben bzw. die Drehwinkelangaben im Wesentlichen als zueinander äquivalent angesehen werden.

Wie oben bereits angedeutet, erfolgt während der Verzögerung mittels Gegenbestromung zu Beginn einer Kommutierung jeweils eine deutliche Spannungsüberhöhung in der Zuleitung der Versorgungsspannung bzw. der Quellenspannung U_{q}. Dies ist beim dargestellten Spannungsverlauf 100 durch eine Spannungsspitze 104 hervorgehoben.

Liegt der Spannungsverlauf 100 über der Quellenspannung U_{q}, so wirkt der Antriebsmotor 16 generatorisch. Der Stromverlauf 102 verdeutlicht dies. Bedingt durch Selbstinduktion in den Erregerwicklungen 74 ist der Stromverlauf 102 dabei grundsätzlich gegenüber dem Spannungsverlauf 100 verschoben, der Strom eilt der Spannung nach. Die Spannungsspitze 104 spiegelt sich in einem kurzzeitig negativen Stromverlauf 102 wieder, währenddessen eine Rückspeisung von Energie in die Quelle erfolgt. Der Bereich der Stromrückspeisung ist dabei mit 106 angedeutet. Sowohl die Spannungsspitze 104 als auch die Stromrückspeisung 106 sind folglich bei der Dimensionierung beteiligter Bauteile und Komponenten zu beachten. In dem Bereich, in dem der Spannungsverlauf 100 unter der Quellenspannung U_{q} liegt und ein positiver Strom fließt, wirkt der Antriebsmotor 16 nicht mehr generatorisch und wird durch das anliegende gegensinnige Feld aktiv verzögert.

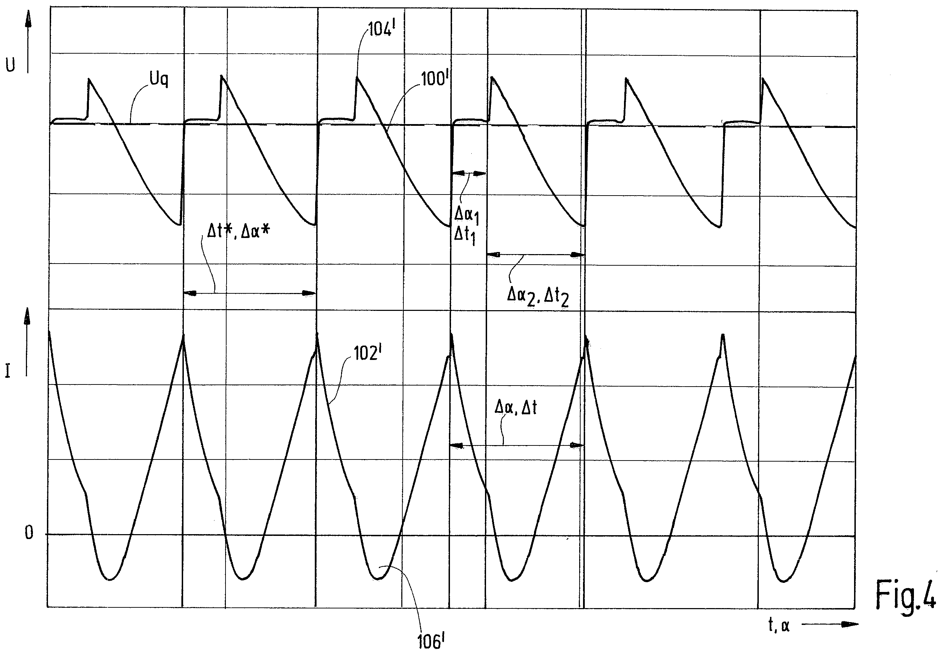

In Zusammenschau der Fig. 3 mit der Fig. 4 wird deutlich, dass bei einem Bremszyklus, bei dem ein erster Zeitabschnitt Δt₁ vorgesehen ist, bei dem die Erregerwicklungen 74 zunächst kurzgeschlossen werden, eine deutliche Bauteilentlastung auftreten kann, die dazu beitragen kann, die Lebensdauer beteiligter Komponenten zu erhöhen.

In Fig. 4 ist der Bremszyklus in den ersten Zeitabschnitt Δt₁, der etwa 25 % der Gesamtdauer Δt des Bremszyklus umfasst, und in einem zweiten Zeitabschnitt Δt₂, der etwa 75 % der Gesamtdauer Δt des Bremszyklus umfasst, aufgeteilt. Im Vergleich der Spannungsspitze 104 gemäß Fig. 3 und einer Spannungsspitze 104' ist ersichtlich, dass eine deutliche Reduzierung bewirkt worden ist. Der Kurzschluss der Erregerwicklungen 74 während des ersten Zeitabschnitts Δt₁ bewirkt zunächst eine "Entkopplung" der in den Erregerwicklungen 74 gespeicherten Energie von der Motorsteuerung 60. Diese kann als Verlustleistung, vorrangig als thermische Energie, abgebaut werden. Infolgedessen verbleibt beim Einleiten des zweiten Zeitabschnitts Δt₂, bei dem die Erregerwicklungen entgegen ihrem ursprünglichen Drehsinn bestromt werden, weniger Energie in den Erregerwicklungen, so dass die Spannungsüberhöhung, also die Spannungsspitze 104', weniger ausgeprägt erscheint. Demgemäß ist auch der Bereich des Stromverlaufs 102', in dem der Strom I Werte <0 annehmen kann, also ein Fall von Stromrückspeisung 106' vorliegt, kleiner als bei einem Bremsvorgang, der ausschließlich auf Gegenbestromung beruht.

In Fig. 4 ist ferner mit Δt* bzw. Δα* ein vorheriges Kommutierungsintervall angedeutet, anhand dessen die Aufteilung des aktuellen Kommutierungsintervalls Δt, Δα in den ersten Abschnitt Δt₁, Δα₁ sowie den zweiten Abschnitt Δt₂, Δα₂ erfolgen kann. Es wird dabei deutlich, dass der vorherige Abschnitt Δt*, Δα* nicht unmittelbar vor dem betrachteten Abschnitt Δt, Δα liegen muss, sondern vielmehr ebenso diesem weiter vorgelagert sein kann. Da sich die einzelnen dargestellten Kommutierungsintervalle auch bei der Verzögerung nicht merklich voneinander unterscheiden, lässt die Betrachtung des vorherigen Kommutierungsintervalls Δt*, Δα* eine ausreichende Genauigkeit bei der Bestimmung des ersten Abschnitt Δt₁, Δα₁ sowie des zweiten Abschnitt Δt₂, Δα₂ zu. Dazwischen liegende Kommutierungsintervalle können etwa erforderlich sein, um genügend Zeit für dabei anstehende Berechnungs- bzw. Logikoperationen zur Verfügung stellen zu können.

Zum Bewirken einer möglichst großen Verzögerung ist es angestrebt, den ersten Zeitabschnitt möglichst kurz und den zweiten Zeitabschnitt möglichst lang zu gestalten. So ist es grundsätzlich bevorzugt, den ersten Zeitabschnitt auf maximal 15 %, vorzugsweise 10 %, weiter bevorzugt 5 % der Dauer des Kommutierungsintervalls Δt zu begrenzen. Die sich dabei ergebenden, entsprechend höheren Maximalwerte für die Spannung U sowie den Strom I können diesem Bestreben Grenzen auferlegen. Jedoch ist vorstellbar, beispielsweise bei einem kritischen Betriebszustand, bei dem die Bedienersicherheit bzw. ein möglichst schneller Stillstand des Antriebsmotors 16 vorrangig sind, eine entsprechende Aufteilung des Kommutierungsintervalls vorzusehen. Während üblicher Betriebszustände, etwa dem Erreichen eines Soll-Drehmoments bei einem Schraubvorgang, könnte der erste Zeitabschnitt Δt₁ entsprechend länger ausfallen, um die Bauteilbelastung zu minimieren.

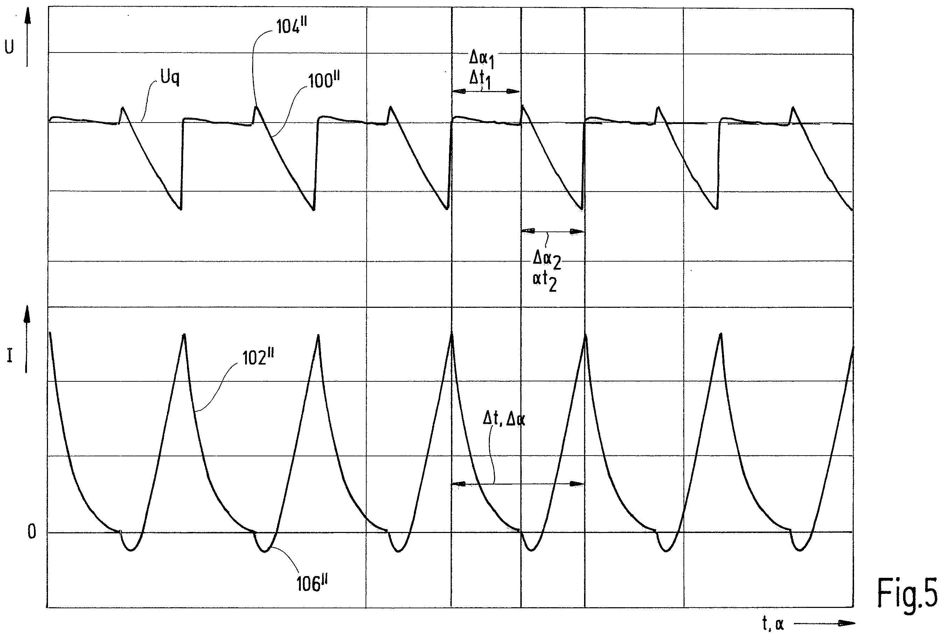

Fig. 5 stellt grundsätzlich einen ähnlichen Verlauf von Spannung U und Strom I wie in Fig. 4 dar, jedoch weisen dabei sowohl der erste Zeitabschnitt Δt₁ als auch der zweite Zeitabschnitt Δt₂ jeweils etwa 50 % der Dauer des Kommutierungsintervalls Δt auf. Es ist unmittelbar ersichtlich, dass die Spannungsspitze 104" deutlich kleiner als in den Figuren 3 und 4 ausfällt. Dementsprechend weist auch der Stromverlauf 102" einen kleineren negativen Abschnitt auf, so dass es zu einer weiter reduzierten Stromrückspeisung 106" kommen kann. Insgesamt kann eine Bremsprozedur mit Bremszyklen gemäß Fig. 5 zu einer verringerten Bauteilbelastung in der Steuereinrichtung 58 sowie der Energieversorgungseinrichtung 62 führen. Gleichwohl versteht sich, dass damit eine weniger starke Verzögerung des Antriebsmotors 16 des Handwerkzeugs 10 einhergeht.

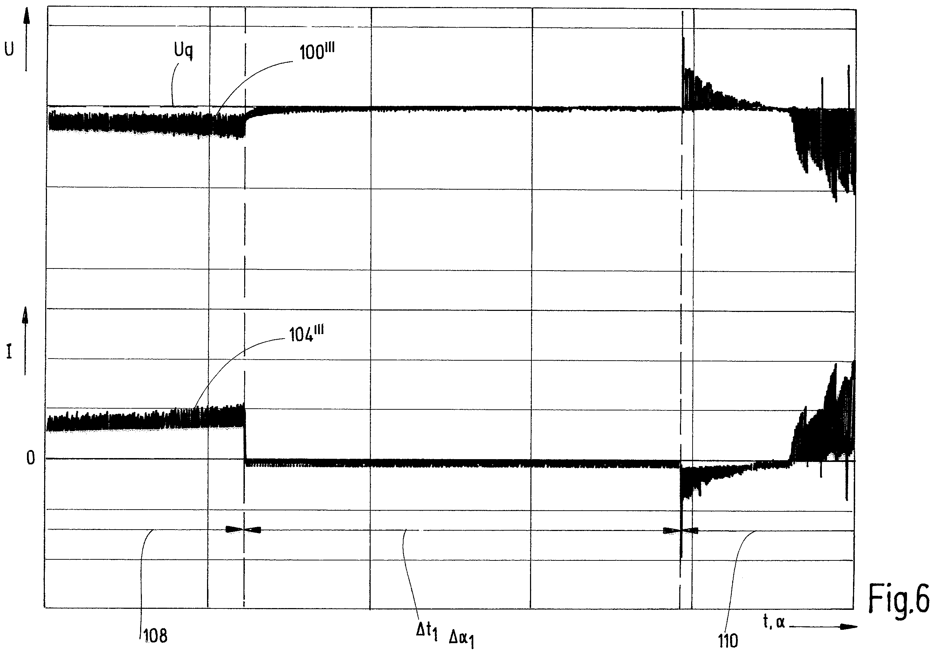

Fig. 6 verdeutlicht einen Bremsvorgang, der lediglich auf einer Kurzschlussbremsung basiert. Die Verläufe von Spannung U 100" sowie Strom I 102'" zeigen dabei den zeitlichen Übergang von einem Normalbetrieb 108 zu einem Bremsbetrieb, bei dem während des Bremszyklus ein Kurzschluss der Erregerwicklungen 74 erfolgt, sowie schließlich hin zu einem geregelten Betrieb 110, bei dem zunächst eine Spannungsspitze auftritt. Der Zeitabschnitt der Kurzschlussbremsung ist mit Δt₁ bezeichnet. Es wird deutlich, dass während der Kurzschlussbremsung die Erregerwicklungen 74 derart von der Steuereinrichtung 58 mit der Motorsteuerung 60 entkoppelt sind, dass keine wesentlichen Rückwirkungen auftreten können.

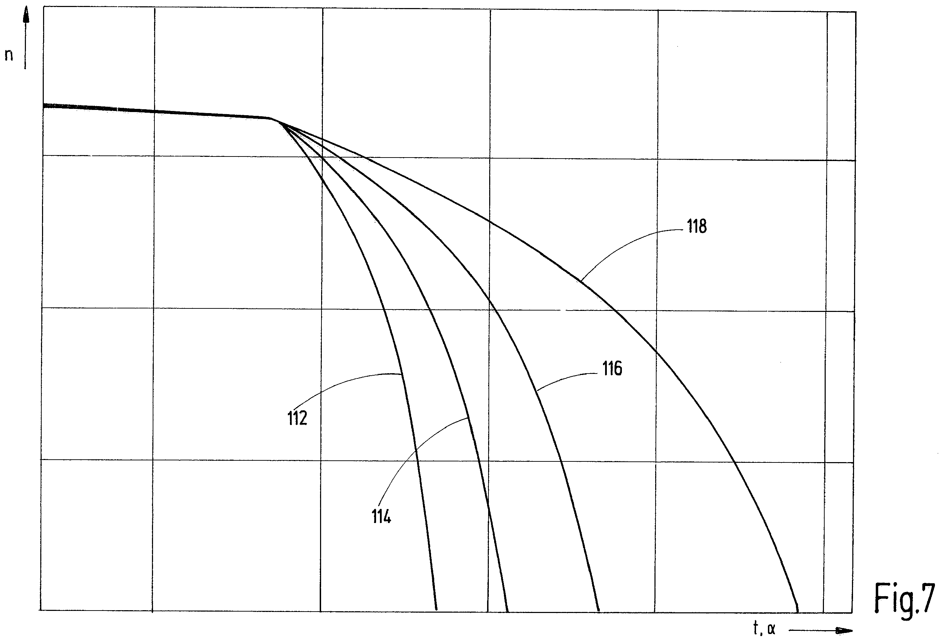

Zusammenfassend verdeutlicht Fig. 7 den Einfluss verschiedener Kurzschlussanteile sowie Gegenbestromungsanteile am Bremszyklus beim Bremsvorgang auf die Gesamtdauer des Bremsvorgangs bzw. die dabei zu erreichende Verzögerung.

Es ist dabei eine Drehzahl n über die Zeit t bzw. den Drehwinkel α aufgetragen. Erwartungsgemäß liefert ein mit 112 bezeichneter Verlauf, bei dem die Verzögerung auf reiner Gegenbestromung beruht, die deutlichsten Verzögerungswerte bzw. benötigt die geringste Zeit bis zum Stillstand.

Umgekehrt benötigt ein Bremsvorgang, der lediglich auf einer Kurzschlussbremsung beruht, dessen Verlauf in Fig. 7 mit 118 angedeutet ist, die längste Zeit für die Verzögerung.

Die zwischengelagerten Verläufe 114 sowie 116, entsprechen etwa gemäß Fig. 4 und Fig. 5 Bremsvorgängen, bei denen ein gewisser Kurzschlussanteil vorliegt. Der Verlauf 114 zeigt einen Bremsvorgang, bei dem ein Kurzschlussanteil Δt₁ von etwa 25 % und ein Gegenbestromungsanteil Δt₂ von etwa 75 % vorliegt. Demgegenüber stellt der Verlauf 116 eine Konfiguration etwa gemäß Fig. 5 dar, bei der ein Kurzschlussanteil Δt₁ von ungefähr 50 % und dementsprechend ein Gegenbestromungsanteil Δt₂ von ebenso etwa 50 % der Dauer Δt eines Bremszyklus vorliegt.

Je kürzer der Kurzschlussanteil gewählt wird, desto größer ist die erreichbare Verzögerung, ebenso sinkt die benötigte Zeit bis zum Stillstand. Umgekehrt kann die Bauteilbelastung reduziert werden, je kürzer der Gegenbestromungsanteil gewählt wird.

Im Rahmen der Erfindung ist es gelungen, ein Handwerkzeug mit einem Antriebsmotor anzugeben, das eine Steuereinrichtung aufweist, die dazu ausgebildet ist, abhängig von einem Bremssignal eine Verzögerung des Handwerkzeugs einzuleiten, bei der ein optimaler Kompromiss zwischen Bauteilbeanspruchung und Langlebigkeit sowie Leistungsfähigkeit und hoher erzielbarer Verzögerung erzielt werden kann.

## Patentansprüche

1. Handwerkzeug mit einem Antriebsmotor (16), der mit einem Abtrieb (18) koppelbar ist, einer Energieversorgungseinrichtung (62) zur Bereitstellung elektrischer Energie, einer Steuereinrichtung (58) mit einer Motorsteuerung (60) zur Ansteuerung des Antriebsmotors (16) und einem Betriebszustandserkennungsmodul (61), das zur Erfassung zumindest einer Betriebszustandsgröße und abhängig davon zur Ausgabe eines Bremssignals ausgebildet ist, **dadurch gekennzeichnet, dass** die Steuereinrichtung (58) dazu ausgebildet ist, abhängig vom Bremssignal eine Bremsprozedur einzuleiten, bei der Bremszyklen vorgesehen sind, die einen ersten Zeitabschnitt (Δt₁), bei dem der Antriebsmotor (16) kurzgeschlossen ist, und einen zweiten Zeitabschnitt (Δt₂), bei dem der Antriebsmotor (16) entgegen seinem ursprünglichen Drehsinn bestromt ist, aufweisen, wobei die Dauer (Δt) der Bremszyklen summarisch aus dem ersten Zeitabschnitt (Δt₁) und dem zweiten Zweitabschnitt (Δt₂) gebildet ist, und dass die Steuereinrichtung (58) dazu ausgebildet ist, die Dauer des ersten Zeitabschnitts (Δt₁) und damit die Dauer des zweiten Zeitabschnitts (Δt₂) derart abzuleiten, dass Maximalwerte für Strom oder Spannung nicht überschritten werden.

2. Handwerkzeug (10) nach Anspruch 1, **dadurch gekennzeichnet, dass** der zweite Zeitabschnitt (Δt₂) maximal 95% der Dauer (Δt), vorzugsweise maximal 75% der Dauer (Δt) umfasst.

3. Handwerkzeug (10) nach Anspruch 1 oder 2, **dadurch gekennzeichnet, dass** der erste Zeitabschnitt (Δt₁) mindestens 5% der Dauer (Δt), vorzugsweise mindestens 25% der Dauer (Δt) umfasst.

4. Handwerkzeug (10) nach einem der vorhergehenden Ansprüche, **dadurch gekennzeichnet, dass** der Antriebsmotor (16) ein elektronisch kommutierter Elektromotor ist, wobei die Dauer (Δt) eines Bremszyklus vorzugsweise der Dauer eines Kommutierungsintervalls entspricht.

5. Handwerkzeug (10) nach einem der vorhergehenden Ansprüche, **dadurch gekennzeichnet, dass** die zumindest eine Betriebszustandsgröße mittelbar oder unmittelbar von einer Größe abgeleitet ist, die aus der Gruppe ausgewählt ist, die aus anliegender Spannung oder Stromaufnahme des Antriebsmotors (16), Ladezustand oder Endladezustand des Akkumulators (64), Antriebsgeschwindigkeit, Antriebsbeschleunigung, Abtriebsgeschwindigkeit, Abtriebsbeschleunigung, Antriebsmoment, Abtriebsmoment, Drehwinkel, Eindring- oder Bearbeitungstiefe, Schwingungs- oder Vibrationsexposition, Halte- oder Reaktionsmoment des Handwerkzeugs (10), Einschaltzustand oder Betriebsart des Handwerkzeugs (10) und Betriebstemperatur des Handwerkzeugs (10) besteht.

6. Handwerkzeug (10) nach einem der vorhergehenden Ansprüche, **dadurch gekennzeichnet, dass** der Antriebsmotor (16) als permanenterregter Motor mit elektronischer Kommutierung ausgebildet ist.

7. Handwerkzeug (10) nach Anspruch 6, **dadurch gekennzeichnet, dass** der Antriebsmotor (16) einen permanenterregten Rotor (66) aufweist, dem zumindest ein Positionsgeber (76), vorzugsweise ein Hall-Sensor, zur Erfassung der Position des Rotors (66) zugeordnet ist.

8. Handwerkzeug (10) nach Anspruch 6, **dadurch gekennzeichnet, dass** die Steuereinrichtung (58) zur mittelbaren Erfassung der Position des Rotors (66) über die Gegeninduktion einer Wicklung (74a, 74b, 74c) zur Erzeugung eines den Rotor (66) antreibenden Drehfeldes des Antriebsmotors (16) ausgebildet ist.

9. Handwerkzeug (10) nach einem der vorhergehenden Ansprüche, **dadurch gekennzeichnet, dass** der Antriebsmotor (16) eine Mehrzahl von Wicklungen (74a, 74b, 74c) zur Erzeugung eines den Rotor (66) antreibenden Drehfeldes aufweist, wobei die Wicklungen (74a, 74b, 74c) in Sternschaltung oder in Dreieckschaltung ansteuerbar sind.

10. Handwerkzeug (10) nach einem der vorhergehenden Ansprüche, **dadurch gekennzeichnet, dass** die Steuereinrichtung (58) dazu ausgebildet ist, während eines Bremszyklus einen mehrmaligen Wechsel zwischen dem ersten Zeitabschnitt (Δt₁) und dem zweiten Zeitabschnitt (Δt₂), vorzugsweise einen mehrmaligen Wechsel zwischen dem ersten Zeitabschnitt (Δt₁), dem zweiten Zeitabschnitt (Δt₂) sowie einer Freilaufphase, zu bewirken.

11. Handwerkzeug (10) nach einem der vorhergehenden Ansprüche, **dadurch gekennzeichnet, dass** die Steuereinrichtung (58) dazu ausgebildet ist, während des ersten Zeitabschnitts (Δt₁) oder des zweiten Zeitabschnitts (Δt₂) eine pulsweitenmodulierte Bestromung oder einen pulsweitenmodulierten Kurzschluss des Antrebsmotors (16) zu bewirken.

12. Verfahren zur Verzögerung einer Antriebsbewegung eines Handwerkzeugs (10) mit einem Antriebsmotor (16) mit den folgenden Schritten:
- Erfassen zumindest einer Betriebszustandsgröße des Handwerkzeugs (10);
- Erzeugen eines Bremssignals abhängig von der zumindest einen Betriebszustandsgröße; **gekennzeichnet durch**:
- Einleiten einer Bremsprozedur abhängig vom Bremssignal, wobei die Bremsprozedur Bremszyklen aufweist, mit einem ersten Zeitabschnitt (Δt₁) und einem zweiten Zeitabschnitt (Δt₂), wobei die Dauer (Δt) eines Bremszyklus vorzugsweise der Dauer eines Kommutierungsintervalls entspricht, dabei:
- Kurzschließen des Antriebsmotors (16) während des ersten Zeitabschnitts (Δt₁); und
- Bestromen des Antriebsmotors (16) entgegen seinem ursprünglichen Drehsinn während des zweiten Zeitabschnitts (Δt₂); wobei
- die Dauer (Δt) eines Bremszyklus summarisch aus dem ersten Zeitabschnitt (Δt₁) und dem zweiten Zweitabschnitt (Δt₂) gebildet ist, wobei der zweite Zeitabschnitt (Δt₂) vorzugsweise maximal 95% der Dauer (Δt), weiter bevorzugt maximal 75% der Dauer (Δt) umfasst; und
- wobei ferner der Schritt des Bestimmens der Dauer des ersten Zeitabschnitts (Δt₁) und damit der Dauer des zweiten Zeitabschnitts (Δt₂) derart vorgesehen ist, dass Maximalwerte für Strom oder Spannung nicht überschritten werden.

13. Verfahren nach Anspruch 12, bei dem die zumindest eine Betriebszustandsgröße mittelbar oder unmittelbar von einer Größe abgeleitet wird, die aus der Gruppe ausgewählt wird, die aus anliegender Spannung oder Stromaufnahme des Antriebsmotors (16), Ladezustand oder Endladezustand des Akkumulators (64), Antriebsgeschwindigkeit, Antriebsbeschleunigung, Abtriebsgeschwindigkeit, Abtriebsbeschleunigung, Antriebsmoment, Abtriebsmoment, Drehwinkel, Eindring- oder Bearbeitungstiefe, Schwingungs- oder Vibrationsexposition, Halte- oder Reaktionsmoment des Handwerkzeugs (10), Einschaltzustand oder Betriebsart des Handwerkzeugs (10) und Betriebstemperatur des Handwerkzeugs (10) besteht.

14. Verfahren nach Anspruch 12 oder 13, bei dem ferner beim Schritt des Bestimmens der Dauer des ersten Zeitabschnitts (Δt₁) und damit der Dauer des zweiten Zeitabschnitts (Δt₂) der Schritt des Erfassens der Dauer (Δt*) eines vorherigen Kommutierungsintervalls als Referenzdauer vorgesehen ist.

## Claims

1. Hand tool with a drive motor (16), which can be coupled with an output (18), an energy supply device (62) for the provision of electric energy, a control device (58) with a motor control (60) for driving the drive motor (16) and an operating state recognition module (61) which is designed to detect at least one operating state value and dependent thereon for the output of a braking signal, **characterised in that** the control device (58) is designed to initiate, depending on the braking signal, a braking procedure in which braking cycles are provided, which have a first time segment (Δt₁) in which the drive motor (16) is short-circuited, and a second time segment (Δt₂) in which the drive motor (16) is supplied with current against its original direction of rotation, wherein the duration (Δt) of the braking cycles is summarily formed from the first time segment (Δt₁) and the second time segment (Δt₂), and that the control device (58) is designed to derive the duration of the first time segment (Δt₁) and thus the duration of the second time segment (Δt₂) such that maximum values for current or voltage are not exceeded.

2. Hand tool (10) according to claim 1, **characterised in that** the second time segment (Δt₂) comprises at most 95% of the duration (Δt), preferably at most 75% of the duration (Δt).

3. Hand tool (10) according to claim 1 or 2, **characterised in that** the first time segment (Δt₁) comprises at least 5% of the duration (Δt), preferably at least 25% of the duration (Δt).

4. Hand tool (10) according to one of the preceding claims, **characterised in that** the drive motor (16) is an electrically commutated electric motor, wherein the duration (Δt) of a braking cycle is preferably equal to the duration of a commutation interval.

5. Hand tool (10) according to one of the preceding claims, **characterised in that** the at least one operating state value is derived indirectly or directly from a value, which is selected from the group which includes applied voltage or power consumption of the drive motor (16), charging status or final charging status of the accumulator (64), drive speed, drive acceleration, output speed, output acceleration, drive torque, output torque, rotational angle, penetration depth or machining depth, exposure to vibration or oscillation, holding torque or reaction torque of the hand tool (10), switched on state or operating mode of the hand tool (10) and operating temperature of the hand tool (10).

6. Hand tool (10) according to one of the preceding claims, **characterised in that** the drive motor (16) is formed as a permanently excited motor with electronic commutation.

7. Hand tool (10) according to claim 6, **characterised in that** the drive motor (16) has a permanently excited rotor (66) which has at least one positioning sensor (76), preferably one Hall sensor, for detecting the position of the rotor (66).

8. Hand tool (10) according to claim 6, **characterised in that** the control device (58) is designed for the indirect detection of the position of the rotor (66) via the mutual induction of a coil (74a, 74b, 74c) for the generation of a rotating field of the drive motor (16), said field driving the rotor (66).

9. Hand tool (10) according to one of the preceding claims, **characterised in that** the drive motor (16) has a plurality of coils (74a, 74b, 74c) for generating a rotating field driving the rotor (66), wherein the coils (74a, 74b, 74c) can be controlled in star circuit or in delta circuit.

10. Hand tool (10) according to one of the preceding claims, **characterised in that** the control device (58) is designed to carry out several times during a braking cycle a switch between the first time segment (Δt₁) and the second time segment (Δt₂), preferably to carry out several times during a braking cycle a switch between the first time segment (Δt₁), the second time segment (Δt₂) and a freewheel pause.

11. Hand tool (10) according to one of the preceding claims, **characterised in that** the control device (58) is designed to carry out during the first time segment (Δt₁) or during the second time segment (Δt₂) a pulse width modulated current supply or a pulse width modulated short-circuit of the drive motor (16).

12. Method for delaying a drive movement of a hand tool (10) with a drive motor (16) with the following steps:
- detection of at least one operating state value of the hand tool (10);
- generation of a braking signal dependent on the at least one operating state value; **characterised by**:
-- initiation of a braking procedure dependent on the braking signal, wherein the braking procedure has braking cycles, with a first time segment (Δt₁) and a second time segment (Δt₂), wherein the duration (Δt) of a braking cycle is preferably equal to the duration of a commutation interval, there:
-- short-circuiting the drive motor (16) during the first time segment (Δt₁); and
-- supplying current to the drive motor (16) against its original direction of rotation during the second time segment (Δt₂); wherein
- the duration (Δt) of a braking cycle is summarily formed from the first time segment (Δt₁) and the second time segment (Δt₂), wherein the second time segment (Δt₂) comprises preferably at most 95% of the duration (Δt), more preferably at most 75% of the duration (Δt); and
- wherein in addition the step of the determination of the duration of the first time segment (Δt₁) and thus the duration of the second time segment (Δt₂) is provided such that maximum values for current or voltage are not exceeded.

13. Method according to claim 12, in which the at least one operating state value is derived indirectly or directly from a value which is selected out of the group which includes applied voltage or power consumption of the drive motor (16), charging status or final charging status of the accumulator (64), drive speed, drive acceleration, output speed, output acceleration, drive torque, output torque, rotational angle, penetration depth or machining depth, exposure to vibration or oscillation, holding torque or reaction torque of the hand tool (10), switched on state or operating mode of the hand tool (10) and operating temperature of the hand tool (10).

14. Method according to claim 12 or 13, in which additionally, at the step of determining the duration of the first time segment (Δt₁) and thus the duration of the second time segment (Δt₂), the step of determining the duration (Δt*) of a previous commutation interval as reference duration is provided.

## Revendications

1. Outil manuel avec un moteur d'entraînement (16) qui peut être couplé à une sortie (18), un dispositif d'alimentation en énergie (62) servant à fournir de l'énergie électrique, un dispositif de commande (58) avec une commande de moteur (60) servant à piloter le moteur d'entraînement (16) et un mode de reconnaissance d'état de fonctionnement (61) qui est réalisé pour détecter au moins une grandeur d'état de fonctionnement et, indépendamment de cela, pour émettre un signal de freinage, **caractérisé en ce que** le dispositif de commande (58) est réalisé pour lancer une procédure de freinage en fonction du signal de freinage, dans laquelle sont prévus des cycles de freinage qui présentent une première période (Δt₁), lors de laquelle le moteur d'entraînement (16) est court-circuité, et une deuxième période (Δt₂), lors de laquelle le moteur d'entraînement (16) est alimenté en courant dans le sens opposé à son sens de rotation initial, dans lequel la durée (Δt) des cycles de freinage est obtenue de manière cumulée à partir de la première période (Δt₁) et de la deuxième période (Δt₂), et le dispositif de commande (58) est réalisé pour déduire la durée de la première période (Δt₁) et ainsi la durée de la deuxième période (Δt₂) de telle manière que des valeurs maximales pour le courant ou la tension ne sont pas dépassées.

2. Outil manuel (10) selon la revendication 1, **caractérisé en ce que** la deuxième période (Δt₂) comprend au maximum 95 % de la durée (Δt), de préférence au maximum 75 % de la durée (Δt).

3. Outil manuel (10) selon la revendication 1 ou 2, **caractérisé en ce que** la première période (Δt₁) comprend au moins 5 % de la durée (Δt), de préférence au moins 25 % de la durée (Δt).

4. Outil manuel (10) selon l'une quelconque des revendications précédentes, **caractérisé en ce que** le moteur d'entraînement (16) est un moteur électrique à commutation électronique, dans lequel la durée (Δt) d'un cycle de freinage correspond de préférence à la durée d'un intervalle de commutation.

5. Outil manuel (10) selon l'une quelconque des revendications précédentes, **caractérisé en ce que** l'au moins une grandeur d'état de fonctionnement est déduite indirectement ou directement d'une grandeur qui est choisie parmi le groupe qui est constitué d'une tension appliquée ou d'une consommation de courant du moteur d'entraînement (16), d'un état de chargement ou d'un état de déchargement de l'accumulateur (64), d'une vitesse d'entraînement, d'une accélération d'entraînement, d'une vitesse de sortie, d'une accélération de sortie, d'un couple d'entraînement, d'un couple de sortie, d'un angle de rotation, d'une profondeur de pénétration ou d'usinage, d'une exposition aux oscillations ou vibrations, d'un couple de maintien ou de réaction de l'outil manuel (10), d'un état d'activation ou d'un mode de fonctionnement de l'outil manuel (10) et d'une température de fonctionnement de l'outil manuel (10).

6. Outil manuel (10) selon l'une quelconque des revendications précédentes, **caractérisé en ce que** le moteur d'entraînement (16) est réalisé sous la forme d'un moteur à excitation permanente avec une commutation électronique.

7. Outil manuel (10) selon la revendication 6, **caractérisé en ce que** le moteur d'entraînement (16) présente un rotor (66) à excitation permanente, auquel est associée au moins une sonde de position (76), de préférence un capteur à effet Hall, servant à détecter la position du rotor (66).

8. Outil manuel (10) selon la revendication 6, **caractérisé en ce que** le dispositif de commande (58) est réalisé afin de détecter de manière indirecte la position du rotor (66) par l'intermédiaire d'une induction mutuelle d'un enroulement (74a, 74b, 74c) servant à générer un champ tournant, entraînant le rotor (66), du moteur d'entraînement (16).

9. Outil manuel (10) selon l'une quelconque des revendications précédentes, **caractérisé en ce que** le moteur d'entraînement (16) présente une multitude d'enroulements (74a, 74b, 74c) servant à générer un champ tournant entraînant le rotor (66), dans lequel les enroulements (74a, 74b, 74c) peuvent être pilotés selon un branchement en étoile ou un branchement en triangle.

10. Outil manuel (10) selon l'une quelconque des revendications précédentes, **caractérisé en ce que** le dispositif de commande (58) est réalisé pour entraîner pendant un cycle de freinage un changement à plusieurs reprises entre la première période (Δt₁) et la deuxième période (Δt₂), de préférence un changement à plusieurs reprises entre la première période (Δt₁), la deuxième période (Δt₂) ainsi qu'une phase de roue libre.

11. Outil manuel (10) selon l'une quelconque des revendications précédentes, **caractérisé en ce que** le dispositif de commande (58) est réalisé pour provoquer pendant la première période (Δt₁) ou de la deuxième période (Δt₂) une alimentation en courant à modulation en largeur d'impulsion ou un court-circuit à modulation en largeur d'impulsion du moteur d'entraînement (16).

12. Procédé servant à retarder un mouvement d'entraînement d'un outil manuel (10) avec un moteur d'entraînement (16) avec les étapes suivantes de :
- détection d'au moins une grandeur d'état de fonctionnement de l'outil manuel (10) ;
- génération d'un signal de freinage en fonction de l'au moins une grandeur d'état de fonctionnement ;
**caractérisé par** :
- le lancement d'une procédure de freinage en fonction du signal de freinage, dans lequel la procédure de freinage présente des cycles de freinage, avec une première période (Δt₁) et une deuxième période (Δt₂), dans lequel la durée (Δt) d'un cycle de freinage correspond de préférence à la durée d'un intervalle de commutation, dans ce cadre :
-- le court-circuitage du moteur d'entraînement (16) pendant la première période (Δt₁) ; et
-- l'alimentation en courant du moteur d'entraînement (16) dans le sens opposé à son sens de rotation initial pendant la deuxième période (Δt₂), dans lequel
- la durée (Δt) d'un cycle de freinage est obtenue de manière cumulée à partir de la première période (Δt₁) et de la deuxième période (Δt₂), dans lequel la deuxième période (Δt₂) comprend de préférence au maximum 95 % de la durée (Δt), de manière davantage préférée au maximum 75 % de la durée (Δt) ; et
- dans lequel en outre l'étape de la détermination de la durée de la première période (Δt₁) et ainsi de la durée de la deuxième période (Δt₂) est prévue de telle manière que des valeurs maximales pour le courant ou la tension ne sont pas dépassées.

13. Procédé selon la revendication 12, dans lequel l'au moins une grandeur d'état de fonctionnement est déduite indirectement ou directement d'une grandeur qui est choisie parmi le groupe qui est constitué d'une tension appliquée ou d'une consommation de courant du moteur d'entraînement (16), d'un état de chargement ou d'un état de déchargement de l'accumulateur (64), d'une vitesse d'entraînement, d'une accélération d'entraînement, d'une vitesse de sortie, d'une accélération de sortie, d'un couple d'entraînement, d'un couple de sortie, d'un angle de rotation, d'une profondeur de pénétration ou d'usinage, d'une exposition aux oscillations ou vibrations, d'un couple de maintien ou de réaction de l'outil manuel (10), d'un état d'activation ou d'un mode de fonctionnement de l'outil manuel (10) et d'une température de fonctionnement de l'outil manuel (10).

14. Procédé selon la revendication 12 ou 13, dans lequel en outre lors de l'étape de la détermination de la durée de la première période (Δt₁) et ainsi de la durée de la deuxième période (Δt₂), l'étape de la détection de la durée (Δt*) d'un intervalle de commutation précédent en tant que durée de référence est prévue.
